# FASCICULE DE BREVET EUROPEEN

(11) **EP 3 215 356 B1**
(45) Date de publication et mention de la délivrance du brevet: **01.04.2020**
(21) Numéro de dépôt: 15790569.6
(22) Date de dépôt: 05.11.2015
(51) Int. Cl.: B29C 70/76, B29C 41/08, B29C 41/20, B29C 65/48, B29C 65/78, B29L 31/26

(54) **PROCÉDÉ POUR APPLIQUER UN JOINT À UNE PLAQUE**
VERFAHREN ZUM AUFBRINGEN EINER DICHTUNG AUF EINE PLATTE
METHOD FOR APPLYING A SEAL TO A PLATE

(30) Priorité: 05.11.2014 BE 201405051
(43) Date de publication de la demande: 13.09.2017
(73) Titulaire: SPLIFAR, 6220 Fleurus (BE)
(72) Inventeur: MURILLO Y PACIFICO, Candido, B-6220 Fleurus (BE); SCAGLIOLA, Giovanni, B-6220 Fleurus (BE)
(74) Mandataire: Gevers Patents
(86) Numéro de dépôt international: PCT/EP2015/075854
(87) Numéro de publication internationale: WO 2016/071468

(56) Documents cités:
- FR-A1- 2 875 731
- US-A- 5 645 785

## Description

La présente invention concerne un procédé d'application d'un joint à une plaque, en particulier à une plaque présentant des défauts de forme, le procédé comprenant les étapes de:
- prévoir un outil, comprenant au moins un élément de support en matière solide et un élément de support en matière souple,
- délimiter un bord d'intérêt sur une partie de la plaque sur lequel le joint doit être appliqué,
   - placer la plaque sur l'outil de telle façon que le bord d'intérêt repose au moins sur une partie de l'élément de support en matière souple,
   - maintenir la plaque sur l'outil dans une position de référence prédéterminée,
   - appliquer ledit joint sur le bord d'intérêt,
- retirer la plaque et son joint appliqué de l'outil.

Un tel procédé est connu du document EP 0 409 091. La plaque est habituellement formée par un panneau en verre agencé pour être monté dans une carrosserie d'un véhicule. Pour monter le panneau en verre dans une carrosserie, un joint s'étendant le long d'au moins une partie de la périphérie du panneau est utilisé.

Plusieurs méthodes sont actuellement utilisées pour appliquer un joint à une plaque.

Un joint déjà préformé peut être collé ou chaussé sur la plaque. Le brevet européen EP 1 361 098 décrit une méthode pour coller un joint préformé à une plaque à l'aide d'une bande adhésive. Le joint est serré entre les différentes parties d'une bride et la plaque est ensuite poussée sur le joint.

Alternativement, le joint est produit directement sur la plaque, soit par le procédé d'extrusion ou par un procédé de moulage par injection (RIM). Par exemple, le brevet américain US 5 645 785 décrit une méthode d'application d'un joint sur la périphérie d'une vitre au moyen d'un outil d'extrusion sur lequel repose une partie d'un bord de la vitre, l'outil étant en déplacement relatif par rapport au bord de la vitre. Le procédé décrit dans US 5645785 comprend les étapes de :
- prévoir un outil comprenant un élément de support en matière solide et un élément de support en matière souple comprenant une première face et une deuxième face opposée à ladite première face,
- délimiter un bord d'intérêt sur une partie de la plaque sur lequel le joint doit être appliqué,
- placer la plaque sur l'outil de telle façon que le bord d'intérêt repose au moins sur ladite première face dudit élément de support en matière souple,
- maintenir la plaque sur l'outil dans une position de référence prédéterminée,
- appliquer ledit joint sur le bord d'intérêt,
- pousser l'élément en matière souple contre la plaque,
- retirer la plaque et son joint appliqué de l'outil. Le brevet européen EP 1 577 080 décrit, quant à lui, une méthode d'application d'un joint à une plaque. Un procédé de moulage est proposé, dans lequel une composition durcissable est déposée sur au moins une partie de la surface de l'outil. Contrairement au procédé de moulage par injection (RIM), la composition durcissable n'est pas injectée dans un outil fermé, mais est appliquée, soit directement, soit indirectement sur la plaque et la surface de l'outil au moyen d'un dispositif d'application se déplaçant le long de la périphérie de la plaque tout en y appliquant la composition durcissable. Dans un outil ouvert, la composition durcit après son application lorsqu'elle est en contact avec l'air ambiant. Aucune pression n'est exercée sur l'outil ni sur la composition appliquée. La surface de l'outil peut être faite d'un matériau plus souple, tel que par exemple un matériau en silicone. L'outil comprend en général deux parties: une première partie de support faite en métal pourvue d'une rainure dans laquelle une seconde partie souple est insérée. La partie souple est statique et n'exerce dès lors pas de pression sur la plaque lors de l'application de la composition durcissable. La plaque est alors posée sur la seconde partie souple et repose sur une surface de contact. La demande de brevet FR 2 875 731 divulgue, quant à elle, un procédé de fabrication d'un boyau profilé sur un vitrage par encapsulation comportant une étape de moulage par l'intermédiaire d'au moins un système de joint d'étanchéité comprenant au moins un évent. Le vitrage repose sur le au moins un système de joint d'étanchéité pendant l'exécution du procédé sans qu'une pression externe ne soit appliquée sur celui-ci ou sur le vitrage.

Il est à noter que l'étanchéité entre la plaque et l'outil lors de l'application ou de la formation du joint est importante, quelle que soit la technique utilisée. Il est en effet nécessaire que le joint appliqué est parfaitement étanche.

Les techniques énoncées ci-dessus sont performantes lorsque la plaque est parfaitement lisse. Cependant, malgré toutes les précautions prises lors de la fabrication de telles plaques, telles que les vitres de voitures, ces dernières peuvent présenter des irrégularités. En particulier, les formes des vitres développées par les fabricants automobiles sont de plus en plus complexes. Des déviations peuvent être mesurées en termes de variation d'épaisseur de plaque ou en termes de courbure ou encore par la présence de saillies ou d'encoches locales. En réalité, les plaques sont généralement fabriquées avec une certaine tolérance par rapport à une forme de référence.

Cependant, l'application d'un joint est sensible à la présence de défauts locaux. Il existe donc un réel besoin de disposer d'un procédé d'application d'un joint à une plaque qui, en particulier lorsqu'elle présente des défauts de forme ou des défauts locaux, permet quand même l'application d'un joint d'étanchéité à cette plaque.

A cette fin, le procédé suivant l'invention est caractérisé en ce qu'une pression est appliquée, pendant l'application du joint, et perpendiculairement à une surface externe de l'élément en matière souple, la surface externe étant opposée à la surface sur laquelle repose le bord d'intérêt de telle sorte que l'élément en matière souple est poussé contre la plaque.

L'application d'une pression sur un élément en matière souple le long du bord d'intérêt va pousser ce dernier contre la plaque, et en particulier compenser les défauts de forme présents dans la plaque. Il n'y aura ainsi pas de fuites de matière pendant l'application du joint, et l'adhérence du joint à la plaque est continue tout le long du bord d'intérêt.

Dans un premier mode de réalisation préférentiel selon l'invention, ladite pression appliquée est au moins égale à 0.5 bar.

L'application de cette pression présente l'avantage que l'élément en matière souple est poussé de manière adéquate contre la plaque, sans qu'il n'y ait un risque de rupture de la plaque.

Dans un deuxième mode de réalisation préférentiel selon l'invention, le joint est produit en appliquant une composition durcissable au moyen d'un applicateur se déplaçant le long du bord d'intérêt.

Une composition durcissable a comme avantage qu'un joint est formé en un court laps de temps. Le joint durcit en étant partiellement en contact direct avec le bord de la plaque et avec l'élément en matière souple.

Dans un troisième mode de réalisation préférentiel selon l'invention, on applique en tant que composition durcissable, un mélange réactif à base de polyuréthane formulé pour produire un matériau élastomère à base de polyuréthane ayant une densité supérieure à 400 kg/m³.

Ceci présente l'avantage que les propriétés mécaniques du joint sont assurées. La plaque munie de son joint, étant une fenêtre de véhicule, peut aussi être placée dans la carrosserie d'un véhicule et garantissent l'étanchéité des vitres.

Dans un quatrième mode de réalisation préférentiel selon l'invention, le joint est inséré dans un évidement prévu dans l'élément en matière souple, lequel joint est pourvu le long d'un côté d'une substance adhésive.

Placer un joint préformé dans un évidement prévu dans l'élément en matière souple a plusieurs avantages. Le joint pourvu d'une substance adhésive n'est en contact qu'avec l'élément en matière souple, ce qui fait que l'élément de support en matière solide subit moins d'usure provenant du joint et de la substance adhésive. Comme indiqué plus haut, l'élément en matière souple transfert la pression appliquée pour coller le joint pourvu de la substance adhésive à la plaque, et épouse la forme de la plaque le long du bord d'intérêt et assure ainsi une application uniforme du joint le long du bord d'intérêt. Des traitements ultérieurs, tel que l'application d'une roulette sur le joint pour finaliser l'adhérence du joint à la plaque, ne sont plus nécessaires.

Dans un cinquième mode de réalisation préférentiel selon l'invention, un matériau élastique ayant une dureté Shore A inférieure à 90 au moins sur la surface de l'élément en matière souple sur laquelle repose la plaque est utilisé.

Un matériau élastique ayant une dureté Shore A inférieure à 90 a comme avantage que la pression qui est appliquée sur une surface externe de l'élément en matière souple peut être transmise vers la surface de contact. En même temps, le risque que la plaque ne se casse reste très limité. Dans le contexte de la présente invention, « l'échelle Shore A de dureté » fait référence à l'échelle de dureté au duromètre tel que définie selon la norme ASTM D2240 (2010).

Pour une meilleure compréhension de la présente invention, référence sera maintenant faite, à titre d'exemple, aux dessins annexés dans lesquels:
La figure 1 est une vue en coupe transversale du dispositif utilisé dans le procédé pour appliquer un joint à une plaque en utilisant une composition durcissable.
La figure 2 est une vue en coupe transversale du dispositif utilisé dans le procédé pour appliquer un joint à une plaque en utilisant une composition durcissable où l'outil comprend une partie en retrait.
La figure 3a est une vue en coupe transversale du dispositif utilisé avec la plaque placée sur l'outil de telle façon qu'elle repose sur l'élément de support en matière souple.
La figure 3b est une vue en coupe transversale du dispositif utilisé où la composition durcissable est appliquée par un procédé de pulvérisation.
La figure 3c est une vue en coupe transversale du dispositif utilisé après application du joint.
La figure 4 est une vue en coupe transversale du dispositif utilisé dans le procédé pour qu'un joint préformé adhère à une plaque.
La figure 5a est une vue en coupe transversale du dispositif utilisé avec le joint préformé placé dans un évidement prévu dans l'élément en matière souple, et pourvu d'une substance adhésive.
La figure 5b est une vue en coupe transversale du dispositif utilisé où une pression est appliquée résultant en une poussée de l'élément en matière souple vers la plaque.
La figure 5c est une vue en coupe transversale du dispositif utilisé où l'application de la pression est arrêtée lorsque le joint adhère à la plaque.

Dans les figures, les éléments identiques ou analogues portent les mêmes références.

Un joint est généralement appliqué sur au moins une partie du contour d'une plaque et enveloppe au moins partiellement les bords de celle-ci. Dans le cas particulier d'une vitre pour un véhicule, le joint est généralement appliqué le long d'au moins un bord de la vitre pour assurer l'étanchéité lorsque la vitre est insérée dans la carrosserie du véhicule. Dans la suite de la description, nous appellerons bord d'intérêt la partie de la plaque sur laquelle l'application du joint est requise pour son utilisation future. Le bord d'intérêt peut dès lors être une partie du contour, tout le contour de la plaque ou une autre partie de la plaque ou un joint doit être appliqué. D'autre part, le joint peut être appliqué sur une seule face, sur deux faces de la plaque et/ou sur la face de chant périphérique de celle-ci. L'objet de la présente invention peut être utilisé dans tous ces cas de figures. Le terme plaque est utilisé tout le long de la description. Une plaque peut être une vitre en verre, en plexiglas, un panneau solaire, un matériau synthétique ou métallique ou plus généralement tout type de plaque nécessitant l'application d'un joint. D'autre part, dans la présente invention, un joint peut être un élément permettant d'assurer une fonction d'échantéité entre deux éléments, ou une liaison entre deux éléments mais peut également être un organe placé sur un élément purement pour des fins cosmétiques.

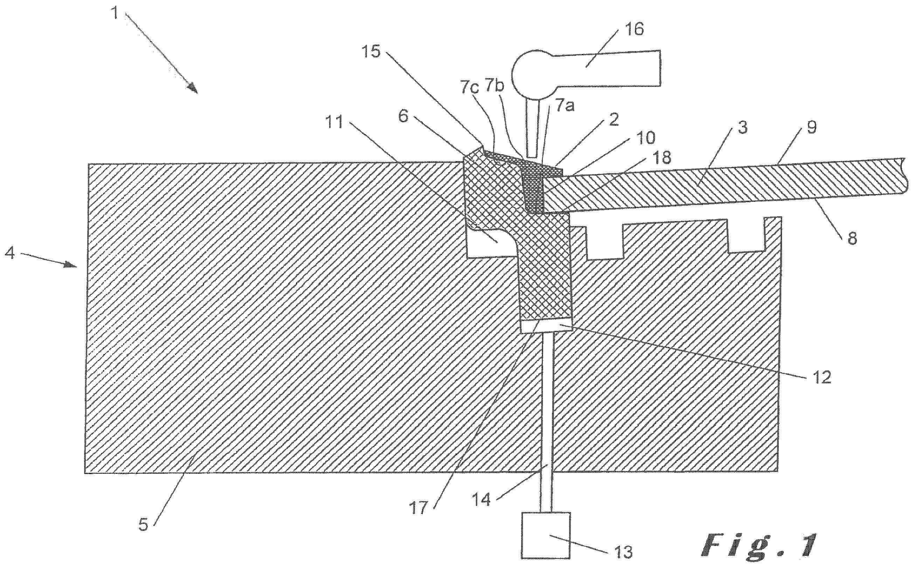

La figure 1 illustre un premier mode de réalisation d'application d'un joint 2 à une plaque 3. Dans ce premier mode de réalisation, le joint 2 est produit par l'application d'une composition durcissable au moyen d'un applicateur 16 qui se déplace le long du bord d'intérêt de la plaque 3. Le joint 2 adhère à la plaque après l'application et le durcissement de la composition sur le bord d'intérêt.

Lorsqu'un joint est appliqué sur une plaque, la plaque est généralement posée sur un outil dont les dimensions de la surface sont comparables aux dimensions de la plaque. Dans le cas d'un pare-brise pour un véhicule sur lequel un joint est appliqué le long de trois bords, l'outil va au moins supporter la plaque tout le long de ces trois bords. Un système pour maintenir la plaque sur l'outil dans une position de référence prédéterminée (non représenté), tel que des ventouses, peut être utilisé pour fixer la plaque 3 dans sa position de référence.

La figure 1 est une vue en coupe de l'outil 4 utilisé pour appliquer le joint 2. L'outil 4 comprend un élément de support en matière solide 5, et un élément en matière souple 6.

L'élément de support en matière solide 5 comprend un évidement longitudinal 11, apte à recevoir l'élément en matière souple 6. Cet évidement 11 s'étend de préférence sur tout le pourtour de l'outil, comme une rainure, et peut ainsi aussi, complètement ou partiellement, former une boucle le long du bord d'intérêt de la plaque lorsque cette dernière est introduite dans l'outil. Cet outil est adapté pour une forme de plaque prédéterminée. L'outil 4 peut cependant comporter aussi plusieurs sections linéaires séparées le long de chaque côté du pourtour.

L'élément en matière souple 6 comprend une jambe et une tête. Les faces supérieures de la jambe et de la tête sont disposées en marche d'escalier. La face 7a correspond à la face supérieure de la jambe. Avantageusement, la face 7c est la face supérieure de la tête de l'élément en matière souple 6. La face 17 correspond à la face inférieure de la jambe.

La plaque 3 comprend une première et une seconde face, respectivement 8 et 9, opposées l'une de l'autre, et une face de chant périphérique 10. La plaque 3 est posée dans l'outil 4 de telle manière que le bord d'intérêt repose sur la face supérieure 7a de la jambe de l'élément en matière souple 6.

La forme de l'évidement 11 dépend de la forme de l'élément en matière souple et est de préférence complémentaire à la forme de l'élément en matière souple. Dans ce mode de réalisation, l'évidement 11 est constitué de deux parties de cavité, l'une étant plus enfoncée que l'autre, dont la forme de la section de chacune est sensiblement rectangulaire, tel qu'illustré sur la figure 1, de telle sorte que la partie de la cavité la plus enfoncée est apte à accueillir la jambe de l'élément en matière souple et la partie la moins enfoncée est apte à accueillir la tête.

La profondeur de l'évidement 11, ou plus particulièrement des deux parties de cavité, est légèrement supérieure à la hauteur de l'élément en matière souple 6 de telle sorte que ce dernier puisse coulisser et s'enfoncer dans l'évidement 11. Avantageusement, la largeur de l'évidement 11 correspond sensiblement à la largeur de l'élément en matière souple 6.

De manière avantageuse, l'évidement 11 est dimensionné de telle sorte que l'élément en matière souple ne puisse s'échapper de l'élément de support en matière solide 5 lorsque la plaque est insérée dans l'outil 4 : la tête de l'élément en matière souple 6 repose contre une paroi de l'évidement 11, la jambe pénètre dans la partie de la cavité la plus enfoncée suffisamment profondément, et la plaque 3 repose sur la face supérieure 7a de la jambe. Des systèmes de blocage plus sophistiqué pourraient être naturellement envisagés.

Lorsque l'élément en matière souple 6 est inséré dans l'évidement 11, une chambre de compensation 12 est formée par la face inférieure et les parois de la cavité la plus enfoncée de l'évidement 11, et la face inférieure 17 de l'élément en matière souple 6. L'élément de support 5 comprend un conduit 14 reliant la chambre de compensation 12 vers l'extérieur de l'outil, de préférence à des moyens pour appliquer un pression 13. L'outil 4 supporte la plaque au moins tout le long du bord d'intérêt. L'élément en matière souple et l'évidement 11 s'étendent au moins le long du bord d'intérêt de la plaque dans l'outil. Une pluralité de conduits 14, reliant la chambre de compensation 12 vers des moyens pour exercer une pression 13 est disposée, à distance l'un de l'autre, dans l'outil.

Dans l'exemple illustré sur la Figure 1, les moyens pour appliquer une pression 13 comprennent avantageusement une pompe permettant l'injection et l'extraction d'un fluide tel qu'un gaz ou un liquide. La pompe est ainsi reliée à la chambre de compensation 12 au moyen du conduit 14.

Dans un autre mode de réalisation, les moyens pour appliquer une pression 13 comprennent des ressorts ou des vessies fournis dans la chambre de compensation 12.

L'agencement de la plaque 3, de l'élément en matière souple 6 et de l'applicateur 16 va déterminer la forme finale du joint. L'applicateur 16, qui se déplace le long du bord d'intérêt de la plaque 3, applique de préférence la composition durcissable perpendiculairement à la surface 7a sur laquelle repose la plaque 3. Ainsi, avantageusement, la composition durcissable se dépose dans l'espace qui se trouve entre la face de chant 10 et la face extérieure 7b. La dimension de cet espace détermine la dimension du joint. Lorsque cet espace est rempli, une partie de la composition durcissable va également se déposer sur l'extrémité de la face 9.

La surface 7c est de préférence munie d'un bord coupant 15. Le bord coupant 15 comprend une partie supérieure pointue, dont le rayon de courbure est de préférence inférieur à 1 mm. Le bord coupant 15 se situe au-delà de la face de chant périphérique 10 de la plaque 3, ainsi formant un premier bord empêchant à la composition durcissable de couler sur l'élément de support 5. La composition durcissable qui va se déposer sur la surface 7c en amont du bord coupant 15 va constituer la lèvre du joint. C'est généralement la lèvre qui assure l'étanchéité lorsqu'une vitre est installée dans la carrosserie. De préférence, la surface 7c n'est pas parallèle à la surface 7a mais s'élève de manière à empêcher à la composition durcissable de couler sur l'élément de support 5.

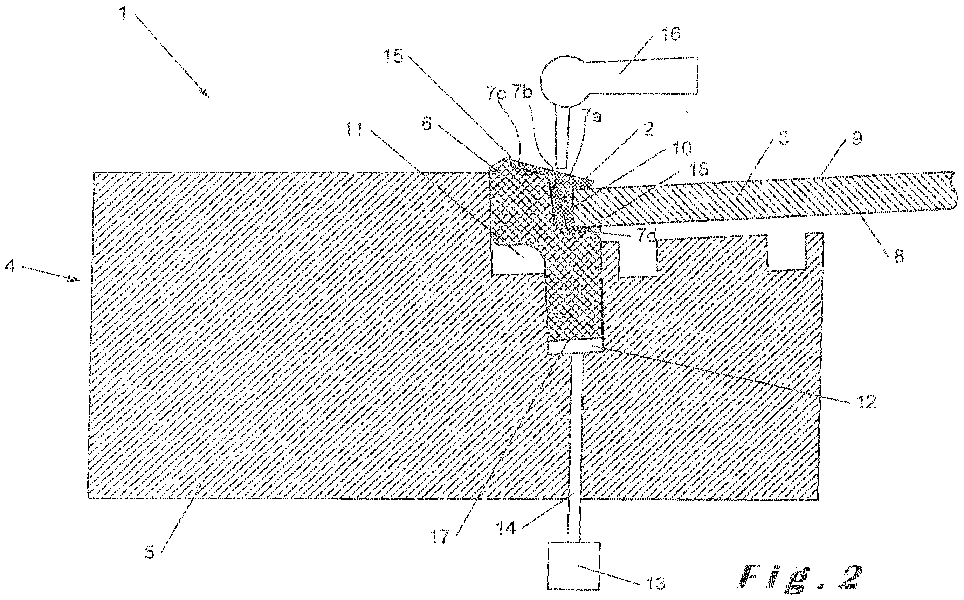

Selon un second mode de réalisation de la présente invention illustré sur la figure 2, la face supérieure 7a comprend un évidement 7d de telle sorte que le joint puisse être également appliqué sur le bord de la première face 8. Ainsi, le joint est appliqué non seulement sur l'extrémité de la face 9 et sur la face de chant périphérique 10, mais également sur l'extrémité de la face 8.

La composition durcissable est de préférence appliquée en utilisant un applicateur 16 tel qu'une buse. Pour la présente invention, différents types de buses peuvent être utilisées pour générer différentes configurations de coulage. A titre de référence, un exemple de buse appropriée est décrit dans le document EP1577080.

De préférence, l'élément de support en matière solide 5 peut être réalisé en métal. Avantageusement, le matériau de l'élément en matière souple 6 comprend un plastique déformable, de préférence un polymère ou un élastomère, et plus avantageusement encore un silicone. De préférence, le matériau de l'élément en matière souple 6 doit être choisi de telle sorte que, lorsqu'il est poussé contre la plaque 3, il se comprime contre la plaque de manière à rendre la surface de contact 18 étanche, également en présence de déformations de la plaque 3. Néanmoins, le matériau de l'élément en matière souple 6 doit également être suffisamment rigide pour que la pression exercée sur ce dernier ne déforme pas les faces 7a, 7b, 7c et 7d. Ces deux conditions sur la rigidité de l'élément en matière souple 6 assurent l'absence d'interstice entre l'élément en matière souple 6 et le bord d'intérêt de la plaque 3 pendant l'application du joint 2, de telle sorte que le joint puisse être correctement formé sur le bord d'intérêt.de la plaque 3, et cela sans fuites de matières.

La face supérieure 7a peut être réalisée au moins en partie, mais de préférence substantiellement en totalité, d'un matériau élastique présentant une dureté Shore A inférieure à 90, et plus particulièrement inférieure à 60. L'élément en matière souple 6 peut ainsi être par exemple constitué d'un matériau en silicone. En conséquence, l'élément en matière souple 6 peut se produire facilement par moulage dans un moule mère ou par extrusion. En raison de la nature élastique de l'élément en matière souple 6, le moule mère n'a pas besoin d'être fabriqué de façon très précise, et ne doit pas être affiné de sorte qu'il est moins coûteux à réaliser.

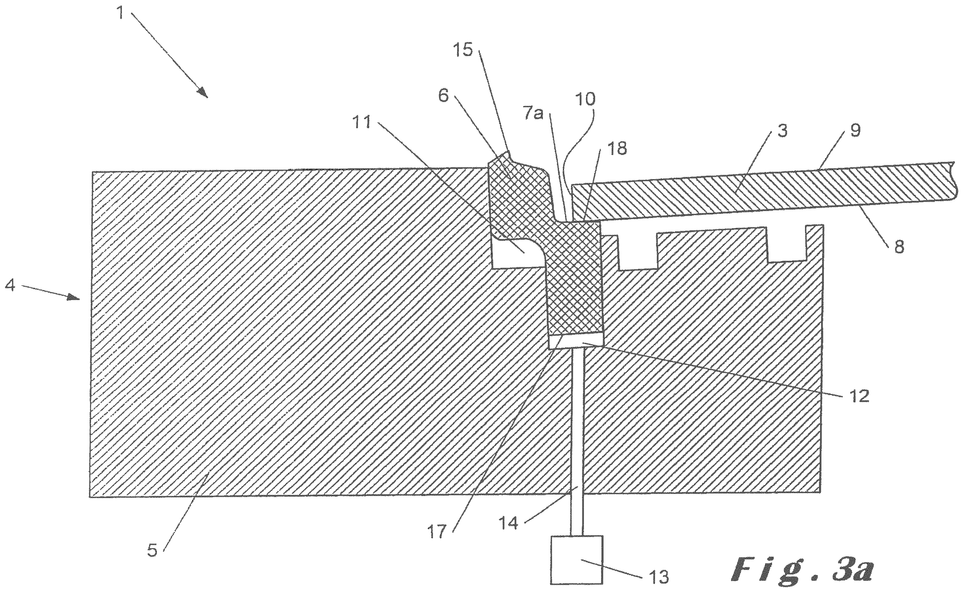

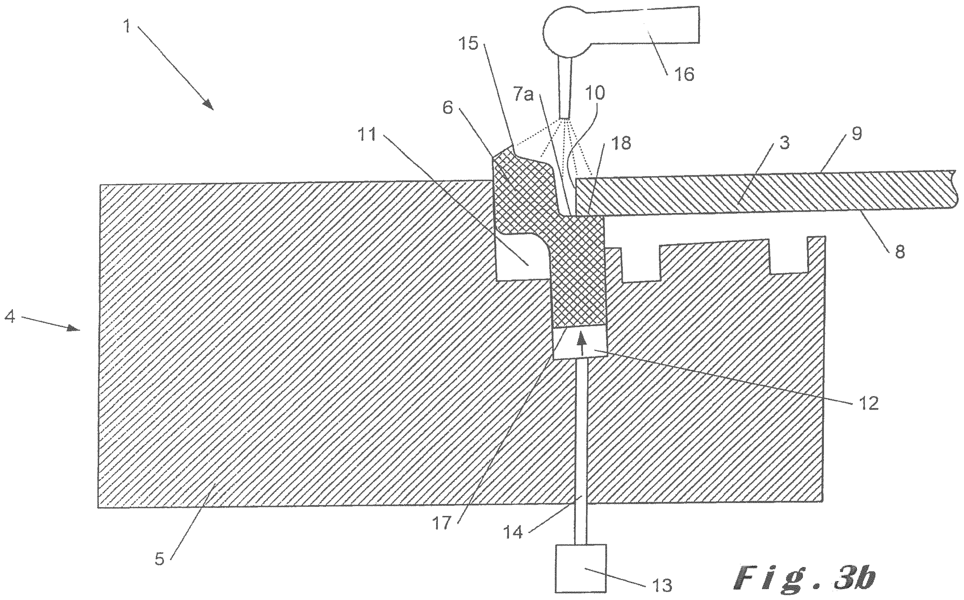

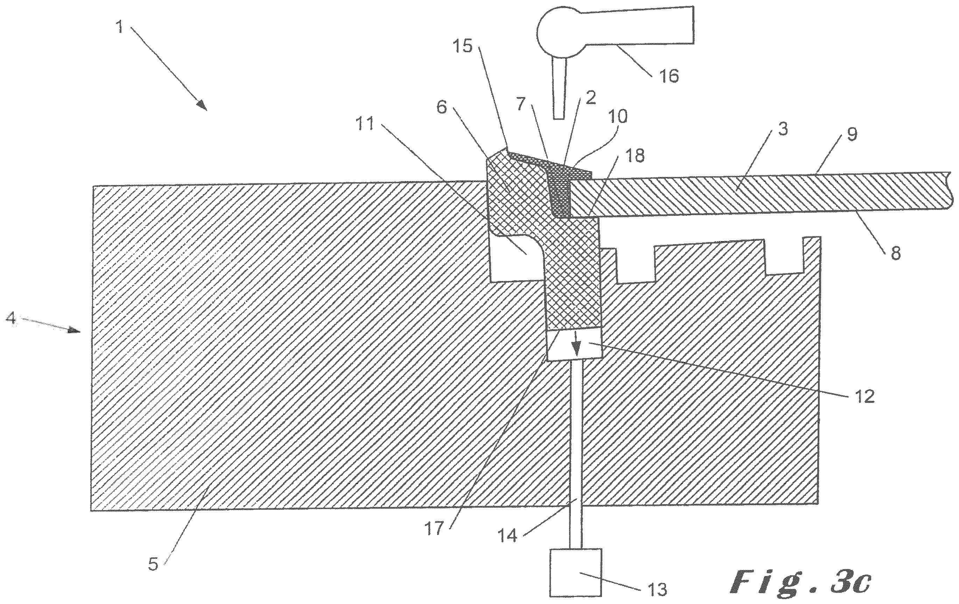

Les figures 3a, 3b et 3c illustrent les différentes étapes nécessaires dans l'application d'un joint 2 à une plaque 3 dans ce mode de réalisation de l'invention. De préférence, la composition durcissable est appliquée par un procédé de coulage au moyen d'un applicateur 16 pourvu d'une buse.

Avantageusement, dans une première étape non illustrée sur les figures, l'outil 4 est préparé et nettoyé. L'élément en matière souple 6 est inséré dans l'évidement 11 de l'outil 4, résultant dans la formation de la chambre de compensation 12 à l'intérieur de l'outil 4. Avantageusement, la plaque 3 est également nettoyée afin d'améliorer l'adhérence du joint à la plaque.

Selon un mode de réalisation de la présente invention, l'élément de support en matière solide 5 est chauffé à une température comprise dans un intervalle allant de 30 à 100°C, de préférence de 45 à 75 °C. Ceci permet d'augmenter la vitesse de la réaction de durcissement, plus rapide à des températures supérieures de la température ambiante.

Dans une deuxième étape illustrée sur la figure 3a, la plaque 3 est placée dans l'outil 4 de telle façon que la plaque 3 repose au moins au niveau du bord d'intérêt sur la face supérieure 7a de l'élément en matière souple 6. Une surface de contact 18 est ainsi créée entre la face supérieure 7a de l'élément en matière souple 6 et la face 8 de la plaque 3. Cependant, le poids de la plaque 3 ne suffit pas à assurer l'étanchéité tout le long de la surface de contact 18.

Toutefois, comme indiqué ci-dessus, des irrégularités ou des déformations locales de la plaque 3 peuvent causer des interstices locaux entre la face supérieure 7a et le bord de la plaque 3. L' étanchéité entre la plaque 3 et la face supérieure 7a est requise tout le long du bord d'intérêt pour l'application du joint. Cette étanchéité est nécessaire pour éviter la fuite de matière pendant l'application du joint.

Dans une troisième étape représentée sur la figure 3b, une pression est appliquée sur la face inférieure 17 de l'élément en matière souple dans la chambre de compensation 12. La pression y est appliquée en utilisant des moyens pour appliquer une pression 13. La pression appliquée dans la chambre de compensation 12 est supérieure à la pression de l'environnement ambiant, qui correspond généralement à la pression atmosphérique.

Cette pression génère une poussée de l'élément en matière souple 6 dans la direction de la plaque 3. Une contre-pression est ainsi générée sur la surface de contact 18 entre la plaque 3 et la surface supérieure 7a de l'élément en matière souple. Cette contre-pression locale générée sur la surface de contact 18 assure une étanchéité locale entre le bord de la plaque 3 et l'élément en matière souple 6. On obtient ainsi une étanchéité améliorée, même dans les endroits comprenant des irrégularités ou des déformations locales, avant le dépôt de la composition durcissable.

Préférentiellement, afin d'assurer cette étanchéité de manière continue le long du bord d'intérêt, la pression est appliquée localement à différents endroits prédéterminés. Ces endroits peuvent être équidistants ou non et dépendent de la disposition des différents conduits 14 le long du support en matière solide 5.

De manière avantageuse, un lubrifiant est déposé entre les parois de la jambe de l'élément en matière souple et les parois de l'évidement 11 afin de faciliter le coulissement de l'élément en matière souple 6 dans l'évidement 11. L'utilisation d'un lubrifiant présente également l'avantage qu'il empêche l'écoulement du fluide de la chambre de compensation 12, afin de maintenir la pression dans la chambre de compensation 12 à un niveau constant ou à modifier de manière stable le niveau de pression sans changements brusques. Le lubrifiant utilisé peut notamment être de l'eau ou de l'huile.

Dans une quatrième étape, illustrée sur la figure 3b, le joint 2 est produit en appliquant la composition durcissable au moyen d'un applicateur 16 qui se déplace le long du bord d'intérêt.

La composition durcissable comprend de préférence un mélange de réaction de polyuréthane, comprenant un polyol et un composant isocyanate. La composition durcissable est de préférence formulée pour produire un matériau polyuréthane élastomère ayant une densité supérieure à 400 kg/m³, et de préférence supérieure à 500 kg/m³.

La composition durcissable peut également être appliquée par exemple à température ambiante. Cependant, afin d'accélérer la réaction de durcissement, la composition durcissable est généralement appliquée à une température plus élevée, par exemple sur une surface chauffée. Dans un mode de réalisation de la présente invention, l'élément de support en matière solide 5 de l'outil 4 est réalisé en métal et est chauffé à une température comprise dans un intervalle allant de de 30 à 100°C, de préférence de 45 à 75 °C.

La totalité de la surface peut être recouverte d'une couche de composition durcissable par de multiples passages de l'applicateur 16, préférentiellement par un maximum de deux passages de l'applicateur 16, et plus particulièrement par un seul passage de l'applicateur 16.

Dans une cinquième étape illustrée sur la figure 3c, après le durcissement de la composition durcissable, les moyens pour appliquer une pression 13 sont arrêtés, la pression dans la chambre de compensation 12 baisse et l'élément en matière souple 6 redescend dans l'évidement 11. La plaque 3 et le joint 2 produit sur celle-ci sont ensuite retirés de l'outil 4.

La composition durcissable est pendant le processus de durcissement en contact avec la face supérieure 7a de l'élément en matière souple 6, la face de chant périphérique 10 de la plaque 3, ou encore avec un gaz. Aucune pression externe supplémentaire n'est exercée sur le joint 2, ni sur l'élément en matière souple 6.

L'élément en matière souple 6 est visible de l'extérieur du dispositif 1. Ainsi, une simple inspection visuelle permet de déterminer l'état de l'élément en matière souple. Si l'élément en matière souple 6 nécessite un remplacement, il peut être facilement et rapidement enlevé de l'élément de support en matière solide 5, sans avoir à détacher d'autres éléments. L'usure de l'outil sera limitée à l'élément en matière souple 6 qui est remplaçable. En effet, lors d'une utilisation normale, le joint n'entre pas en contact avec l'élément de support en matière solide. Le dispositif 1 est par conséquent simple d'entretien.

Dans un second mode de réalisation de l'invention, un joint préformé, est appliqué à la plaque au moyen d'une substance adhésive. La forme de l'élément en matière souple et de l'outil sont différentes du mode de réalisation précédent mais le principe du procédé est similaire. La forme de l'élément en matière souple est adaptée à la forme du joint préformé, dont l'application est effectuée au moyen d'un collage. Le joint préformé peut être en caoutchouc, en matière plastique ou en élastomère.

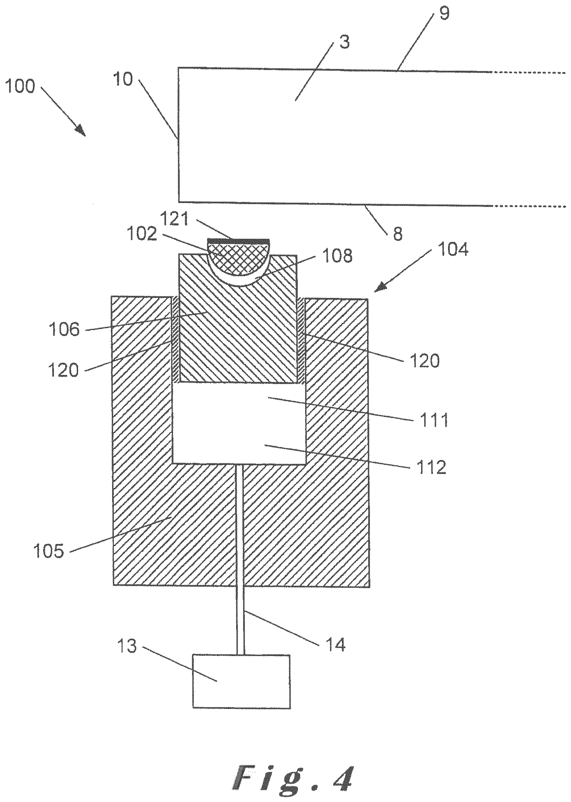

La figure 4 est une vue en coupe transversale d'un dispositif 100 pour appliquer un joint 102 à une plaque 3 selon ce mode de réalisation. La figure 4 illustre l'outil 104 utilisé pour appliquer le joint 102. L'outil 104 comprend un élément de support en matière rigide 105 et un élément en matière souple 106. L'élément de support en matière rigide 105 comprend un évidement 111. L'évidement 111 est en forme de U et l'élément en matière souple 106 est sensiblement rectangulaire. Les dimensions de l'évidement 111 sont adaptées pour que l'élément en matière souple 106 puisse coulisser dans l'évidement 111. Avantageusement, la largeur de l'évidement 111 correspond sensiblement à la largeur de l'élément en matière souple 106. Préférentiellement, la profondeur de l'évidement 111 est légèrement supérieure à la hauteur de l'élément en matière souple 106 de telle sorte que ce dernier puisse s'enfoncer dans l'évidement 111.

Comme dans le premier mode de réalisation de la présente invention, l'élément en matière souple 106 peut dès lors coulisser dans l'évidement, vers le haut pour se rapprocher de la plaque, ou vers le bas pour s'en éloigner. Lorsque l'élément en matière souple 106 est inséré dans l'évidement 111, une chambre de compensation 112 est formée par la face inférieure et les parois de l'évidement 111, et la face inférieure de l'élément en matière souple 106. Les moyens pour appliquer une pression 13 et le conduit 14 qui relie la chambre de compensation 112 aux moyens pour appliquer une pression 13 sont identiques au mode de réalisation précédent.

La forme de l'élément en matière souple 106 dépend de la forme du joint 102 préformé et sa face supérieure est de préférence complémentaire à la forme du joint 102 préformé. Dans ce mode de réalisation, le joint préformé est en forme de demi-cylindre comme illustré sur la figure 4. Dès lors, l'élément en matière souple 106 comprend une rainure longitudinale 108 dont la forme est en U et dont les dimensions sont sensiblement les dimensions du joint.

Le joint préformé est appliqué dans ce mode de réalisation sur la première face 8 de la plaque 3, comme illustré sur la figure 4.

Un bras mécanique (non représenté) peut être utilisé pour positionner le joint préformé 102 dans la rainure 108. Un adhésif 121 est appliqué sur la face supérieure du joint prévue à entrer en contact avec la plaque 3. Avantageusement, cet adhésif 121 est appliqué par des moyens d'application d'adhésif (non représentés).

Préférentiellement, un lubrifiant 120 est déposé entre l'élément en matière souple 106 et l'élément de support en matière solide 105 dans l'évidement 111. L'utilisation d'un lubrifiant 120 présente l'avantage qu'il empêche l'écoulement du fluide de la chambre de compensation 112 vers l'extérieur, comme dans le premier mode de réalisation de la présente invention.

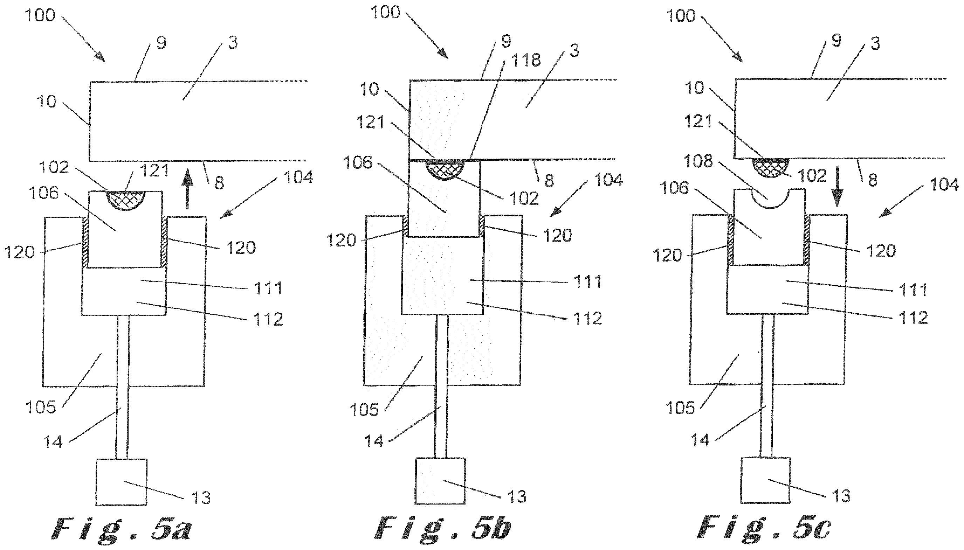

Les figures 5a, 5b et 5c illustrent différentes étapes du procédé d'application du joint selon un mode de réalisation de la présente invention.

La première étape consiste à préparer et nettoyer l'outil 104. L'élément en matière souple 106 est inséré dans l'évidement 111, ainsi formant la chambre de compensation 112. Le joint 102 est placé dans la rainure longitudinale 108 de l'élément en matière souple 106, éventuellement à l'aide d'un bras mécanique. L'adhésif est appliqué sur la face du joint prévue à entrer en contact avec la plaque 3 et forme une couche d'adhésif 121 sur cette face. De préférence, l'adhésif est appliqué sur la face du joint après l'insertion du joint dans la rainure longitudinale 108 de l'élément en matière souple 106. Selon un mode alternatif de réalisation de la présente invention, le joint peut être inséré dans la rainure avec l'adhésif déjà appliqué sur sa face extérieure.

La plaque 3 est positionnée de telle sorte que le bord d'intérêt de la plaque 3 est placé au-dessus de l'élément en matière souple 106. Dans ce mode de réalisation, la première face 8 de la plaque est placée au-dessus de l'outil, tel qu'illustré sur les figures 5a à 5c. Cette surface est de préférence préalablement nettoyée afin d'améliorer l'adhérence du joint à la plaque. Un adhésif peut également être appliqué préalablement sur la surface de la plaque.

Une pression est appliquée dans la chambre de compensation 112 utilisant les moyens pour appliquer une pression 13. L'élément en matière souple 106 est soumis à une force le poussant vers la plaque 3, comme indiqué par la flèche sur la figure 5a. Il est également possible dans un autre mode de réalisation de pousser la plaque vers l'élément en matière souple.

Sur la figure 5b, l'élément en matière souple 106 et le joint 102 sont contre la plaque, et une pression agit tout le long de la surface de contact 118 entre l'élément en matière souple pourvue d'un joint et la plaque. Les surfaces de contact 118 situées de part et d'autre de la rainure longitudinale qui comprend le joint serrent de façon hermétique le joint contre la plaque. Grâce à l'élément en matière souple qui applique une pression sur la plaque, les défauts de surface et les déformations de la plaque 3 ne sont plus une contrainte pour l'adhérence du joint, celui-ci étant en contact avec la surface de la plaque à chaque endroit. Le joint prend la forme de la surface de la plaque et la couche d'adhésif 121 agit en tout point. La pression dans la chambre de compensation est maintenue le temps nécessaire pour que l'adhésif entre le joint 102 et la plaque 3 agisse de manière efficace.

Une fois que le joint 102 adhère à la plaque 3 au moyen de l'adhésif 121, l'élément en matière souple 106 peut être retiré de la plaque 3 dans le sens indiqué par la flèche sur la figure 5c.

## Revendications

1. Procédé d'application d'un joint (2, 102) à une plaque (3), en particulier à une plaque présentant des défauts de forme, le procédé comprenant les étapes de:
- prévoir un outil (4, 104), comprenant
au moins un élément de support en matière solide (5, 105) comprenant un évidement (11, 111), et
un élément de support en matière souple (6, 106) comprenant une première face (7a) et une deuxième face (17) opposée à ladite première face (7a), ledit élément de support en matière souple (6, 106) étant disposé au moins partiellement dans ledit évidement (11, 111),
- délimiter un bord d'intérêt sur une partie de la plaque (3) sur lequel le joint (2, 102) doit être appliqué,
- placer la plaque (3) sur l'outil (4, 104) de telle façon que le bord d'intérêt repose au moins sur ladite première face (7a) dudit élément de support en matière souple (6, 106),
- maintenir la plaque sur l'outil (4, 104) dans une position de référence prédéterminée,
- appliquer ledit joint (2, 102) sur le bord d'intérêt,
- retirer la plaque (3) et son joint (2, 102) appliqué de l'outil (4, 104),
et dans lequel l'élément de support en matière souple (6, 106) est apte à coulisser dans ledit évidement (11, 111) ; le procédé comprenant en outre les étapes de:
- fournir des moyens pour exercer une pression (13) dans une chambre de compensation (12, 112) dudit évidement (11, 111), ladite chambre de compensation (12, 112) étant délimitée au moins partiellement par ladite deuxième face (17) dudit élément de support en matière souple (6, 106) ;
et d'
- appliquer via lesdits moyens (13) une pression pendant l'application du joint (2, 102), et perpendiculairement à ladite deuxième face (17), de telle sorte que l'élément en matière souple (6, 106) est poussé contre la plaque (3).

2. Procédé, selon la revendication 1, **caractérisé en ce que** ladite pression appliquée est au moins égale à 0.5 bar.

3. Procédé, selon l'une quelconque des revendications 1 ou 2, **caractérisé en ce que** le joint (2) est produit en appliquant une composition durcissable au moyen d'un applicateur se déplaçant le long du bord d'intérêt.

4. Procédé selon la revendication 3, **caractérisé en ce qu'**on applique en tant que composition durcissable, un mélange réactif à base de polyuréthane formulé pour produire un matériau élastomère à base de polyuréthane ayant une densité supérieure à 400 kg/m³.

5. Procédé, selon l'une quelconque des revendications 1 à 2, **caractérisé en ce que** le joint (102) est inséré dans un évidement (108) prévu dans l'élément en matière souple (106), lequel joint (102) est pourvu le long d'un côté d'une substance adhésive (121).

6. Procédé selon l'une quelconque des revendications précédentes, **caractérisé en ce qu'**on utilise un matériau élastique ayant une dureté Shore A inférieure à 90 au moins sur la surface de l'élément en matière souple (6, 106) sur laquelle repose la plaque.

## Patentansprüche

1. Verfahren zum Aufbringen einer Dichtung (2, 102) auf einer Platte (3), insbesondere einer Platte, die Formmängel aufweist, wobei das Verfahren die folgenden Schritte umfasst:
- Vorsehen eines Werkzeugs (4, 104), Folgendes umfassend
mindestens ein Tragelement aus einem Feststoff (5, 105), das eine Aussparung (11, 111) umfasst, und
ein Tragelement aus biegsamem Material (6, 106), das eine erste Seite (7a) und eine zweite Seite (17), die der ersten Seite (7a) entgegengesetzt ist, umfasst, wobei das Tragelement aus biegsamem Material (6, 106) mindestens teilweise in der Aussparung (11, 111) angeordnet wird,
- Abgrenzen eines Rands von Interesse auf einem Teil der Platte (3), auf dem die Dichtung (2, 102) aufgebracht werden muss,
- Platzieren der Platte (3) auf dem Werkzeug (4, 104) derart, dass der Rand von Interesse mindestens auf der ersten Seite (7a) des Tragelements aus biegsamem Material (6, 106) aufliegt,
- Halten der Platte auf dem Werkzeug (4, 104) in einer vorbestimmten Bezugsposition,
- Aufbringen der Dichtung (2, 102) auf dem Rand von Interesse,
- Entfernen der Platte (3) und ihrer aufgebrachten Dichtung (2, 102) von dem Werkzeug (4, 104),
und wobei das Tragelement aus biegsamem Material (6, 106) geeignet ist, in der Aussparung (11, 111) zu gleiten; wobei das Verfahren weiter die folgenden Schritte umfasst:
- Bereitstellen der Mittel zum Ausüben eines Drucks (13) in einer Kompensationskammer (12, 112) der Aussparung (11, 111), wobei die Kompensationskammer (12, 112) mindestens teilweise von der zweiten Seite (17) des Tragelements aus biegsamem Material (6, 106) abgegrenzt wird;
und
- über die Mittel (13) Anlegen eines Drucks während des Aufbringens der Dichtung (2, 102) und senkrecht zu der zweiten Seite (17) derart, dass das Element aus biegsamem Material (6, 106) gegen die Platte (3) geschoben wird.

2. Verfahren nach Anspruch 1, **dadurch gekennzeichnet, dass** der angelegte Druck mindestens 0,5 bar beträgt.

3. Verfahren nach einem der Ansprüche 1 oder 2, **dadurch gekennzeichnet, dass** die Dichtung (2) erzeugt wird, indem eine härtbare Zusammensetzung mittels eines Applikators, der sich entlang des Rands von Interesse verlagert, aufgebracht wird.

4. Verfahren nach Anspruch 3, **dadurch gekennzeichnet, dass** als härtbare Zusammensetzung ein reagierendes Gemisch auf der Basis von Polyurethan, das formuliert ist, um ein Elastomermaterial auf Polyurethanbasis zu erzeugen, das eine Dichte von mehr als 400 kg/m³ aufweist, aufgebracht wird.

5. Verfahren nach einem der Ansprüche 1 bis 2, **dadurch gekennzeichnet, dass** die Dichtung (102) in eine Aussparung (108), die in dem Element aus biegsamem Material (106) vorgesehen ist, eingesetzt wird, wobei die Dichtung (102) entlang einer Seite mit einer Klebesubstanz (121) versehen ist.

6. Verfahren nach einem der vorstehenden Ansprüche, **dadurch gekennzeichnet, dass** ein elastisches Material verwendet wird, das eine Shore-Härte A kleiner als 90 mindestens auf der Oberfläche des Elements aus biegsamem Material (6, 106), auf dem die Platte aufliegt, aufweist.

## Claims

1. Method for applying a seal (2, 102) to a plate (3), in particular a plate having shape defects, the method comprising the steps of:
- providing a tool (4, 104), comprising
at least one support element made of solid material (5, 105) comprising a recess (11, 111), and
a support element made of flexible material (6, 106) comprising a first face (7a) and a second face (17) opposite said first face (7a), said support element made of flexible material (6, 106) being arranged at least partially in said recess (11, 111),
- delimiting an edge of interest on a portion of the plate (3) on which the seal (2, 102) must be applied,
- placing the plate (3) on the tool (4, 104) such that the edge of interest rests at least on said first face (7a) of said support element made of flexible material (6, 106),
- holding the plate on the tool (4, 104) in a predetermined reference position,
- applying said seal (2, 102) on the edge of interest,
- removing the plate (3) and the seal (2, 102) thereof applied from the tool (4, 104),
and wherein the support element made of flexible material (6, 106) is capable of sliding in said recess (11, 111); the method further comprising the steps of:
- providing means for exerting a pressure (13) in a compensation chamber (12, 112) of said recess (11, 111), said compensation chamber (12, 112) being delimited at least partially by said second face (17) of said support element made of flexible material (6, 106);
and of
- applying via said means (13), a pressure during the application of the seal (2, 102), and perpendicularly to said second face (17), such that the element made of flexible material (6, 106) is pushed against the plate (3).

2. Method, according to claim 1, **characterised in that** said applied pressure is at least equal to 0.5 bar.

3. Method, according to any one of claims 1 or 2, **characterised in that** the seal (2) is produced by applying a hardenable composition by means of an applicator being moved along the edge of interest.

4. Method according to claim 3, **characterised in that** a polyurethane-based reactive mixture is applied as a hardenable composition, formulated to produce a polyurethane-based elastomer material having a density greater than 400kg/m³.

5. Method, according to any one of claims 1 to 2, **characterised in that** the seal (102) is inserted in a recess (108) provided in the element made of flexible material (106), which seal (102) is provided along a side of an adhesive substance (121).

6. Method according to any one of the preceding claims, **characterised in that** an elastic material having a Shore A hardness less than 90 is used at least on the surface of the element made of flexible material (6, 106) on which the plate rests.
